# EUROPÄISCHE PATENTSCHRIFT

(11) **EP 3 689 119 B1**
(45) Veröffentlichungstag und Bekanntmachung des Hinweises auf die Patenterteilung: **26.10.2022**
(21) Anmeldenummer: 20153573.9
(22) Anmeldetag: 24.01.2020
(51) Int. Cl.: A01B 59/042, B60D 1/30, B60D 1/02, B60D 1/145, A01B 69/00, A01B 71/06

(54) **LANDWIRTSCHAFTLICHES ARBEITSGERÄT, DEICHSELVORRICHTUNG UND ZUGFAHRZEUG-ARBEITSGERÄT-KOMBINATION**
AGRICULTURAL WORKING DEVICE, DRAWBAR DEVICE AND TRACTION VEHICLE WORKING DEVICE COMBINATION
OUTIL DE TRAVAIL AGRICOLE, DISPOSITIF TIMON ET COMBINAISON DE VÉHICULE DE TRACTION ET D'OUTIL DE TRAVAIL

(30) Priorität: 01.02.2019 DE 102019201333
(43) Veröffentlichungstag der Anmeldung: 05.08.2020
(73) Patentinhaber: Deere & Company, Moline, IL 61265 (US)
(72) Erfinder: Guit, Lionel, 68163 Mannheim (DE)
(74) Vertreter: Stein, Stefan

(56) Entgegenhaltungen:
- EP-A1- 2 082 637
- EP-B1- 2 082 637
- WO-A1-2013/175097
- US-A- 5 255 756

## Beschreibung

Die Erfindung betrifft ein landwirtschaftliches Arbeitsgerät gemäss dem Oberbegriff des unabhängigen Anspruchs 1, eine Deichselvorrichtung gemäss dem Oberbegriff des unabhängigen Anspruchs 10 und eine Zugfahrzeug-Arbeitsgerät-Kombination gemäss dem Oberbegriff des unabhängigen Anspruchs 11.

Landwirtschaftliche Arbeitsgeräte mit einer Deichselvorrichtung zum Ziehen des Arbeitsgeräts mit einem Zugfahrzeug sind bekannt. Die Deichselvorrichtung umfasst hierbei zumindest eine Deichsel. Die Deichsel ist an einem Ende mittels eines ersten Schwenklagers an einem der Deichselvorrichtung nachlaufenden Arbeitsgeräteteil, also dem nachlaufenden Teil des landwirtschaftlichen Arbeitsgeräts, um eine erste Hochachse schwenkbar gelagert. Dadurch kann die Deichsel gegenüber dem nachlaufenden Arbeitsgeräteteil abknicken und das gezogene landwirtschaftliche Arbeitsgerät kann beispielsweise in einer Arbeitsstellung seitlich der Spur und in der Straßentransportfahrt mittig hinter dem Zugfahrzeug laufen.

In der DE 27 10 097 wird landwirtschaftliches Arbeitsgerät, hier eine Rundballenpresse, mit einer Deichselvorrichtung offenbart, bei welcher die Deichsel, die mittels eines ersten Schwenklagers am nachlaufenden Arbeitsgeräteteil schwenkbar gelagert ist, gegenüber dem nachlaufenden Arbeitsgeräteteil verschwenkbar ist, also abknicken kann. Die EP 2 082 637 A1 offenbart ebenfalls ein gezogenes landwirtschaftliches Arbeitsgerät, das seitlich der Spur des Zugfahrzeugs laufen kann, indem die Deichsel gegenüber dem nachlaufenden Arbeitsgeräteteil einstellbar ist. Die WO 2013/175097 A1 und die US 5 255 756 A offenbaren Arbeitsgeräte bei welchen die Deichselvorrichtung und der nachlaufende Arbeitsgeräteteil zueinander verschwenkbar sind.

Der Stand der Technik zeigt einen Mangel hinsichtlich der Stabilität des Arbeitsgeräts, insbesondere des ersten Schwenklagers. Beispielsweise kann im Betriebszustand des Arbeitsgeräts aufgrund eines Verdrehens, Ziehens oder Kippen des nachlaufenden Arbeitsgeräteteils ein Drehmoment oder ein Kraft derart an der Deichselvorrichtung, insbesondere am ersten Schwenklager angreifen, dass dieses beschädigt oder sogar zerstört wird. Somit ist ein wesentliches Problem der bekannten Arbeitsgeräte mit Deichselvorrichtungen, dass diese störanfällig und instabil sind, also an die Grenzen der konstruktiv technischen Machbarkeit stossen.

Ausgehend von diesem Stand der Technik ist es daher eine Aufgabe der vorliegenden Erfindung ein landwirtschaftliches Arbeitsgerät und eine Deichselvorrichtung und eine Zugfahrzeug-Arbeitsgerät-Kombination vorzuschlagen, welche die aus dem Stand der Technik bekannten Nachteile vermeiden. Insbesondere ein landwirtschaftliches Arbeitsgerät und eine Deichselvorrichtung und eine Zugfahrzeug-Arbeitsgerät-Kombination vorzuschlagen, die konstruktiv derart ausgestaltet sind, dass diese einer Belastung mit höheren Drehmomenten und/oder Kräften standhalten.

Diese Aufgabe wird durch ein landwirtschaftliches Arbeitsgerät mit den Merkmalen des Anspruchs 1, eine Deichselvorrichtung mit den Merkmalen des Anspruchs 10 und eine Zugfahrzeug-Arbeitsgerät-Kombination mit den Merkmalen des Anspruchs 11 gelöst.

Die abhängigen Ansprüche beziehen sich auf besonders vorteilhafte Ausführungsformen der Erfindung.

Erfindungsgemäß wird ein landwirtschaftliches Arbeitsgerät mit einer Deichselvorrichtung zum Ziehen des Arbeitsgeräts mit einem Zugfahrzeug vorgeschlagen. Das Arbeitsgerät umfasst hierbei ein Bodeneingriffsmittel zur Abstützung auf dem Erdboden und die Deichselvorrichtung umfasst eine Deichsel. Die Deichsel ist an einem Ende mittels eines ersten Schwenklagers an einem Deichseljoch der Deichselvorrichtung um eine erste Hochachse schwenkbar gelagert. Die Deichselvorrichtung umfasst weiter einen Deichselarm, der sich insbesondere aus der Deichsel erstrecken kann, wobei der Deichselarm an einem Deichselarmende mittels eines zweiten Schwenklagers an dem Deichseljoch um eine zweite Hochachse schwenkbar gelagert ist.

Das landwirtschaftliche Arbeitsgerät kann ein Sammelfahrzeug für Erntegut, beispielsweise eine Ballenpresse für rechteckige oder runde Ballen, bevorzugt eine Rundballenpresse oder ein Ladewagen, insbesondere mit einer Aufnahmeeinrichtung, oder ein Mähwerk oder eine Heuwerbungsmaschine oder ein Wender oder ein Schwader sein. Die Bodeneingriffsmittel können entweder Räder oder Raupenketten sein und mit dem Arbeitsgerät, insbesondere mit dem nachlaufenden Arbeitsgeräteteil, mittels einer Geräteachse mit einem Rahmen oder einem Fahrgestell des nachlaufenden Arbeitsgeräteteils gekoppelt sein. Im Speziellen kann das landwirtschaftliche Arbeitsgerät, insbesondere der nachlaufende Arbeitsgeräteteil, durch Räder auf dem Erdboden abgestützt sein. Das Arbeitsgerät, insbesondere der nachlaufende Arbeitsgeräteteil, kann ein mit einem Feld zusammenwirkendes Bearbeitungselement umfassen. Das Bearbeitungselement kann insbesondere ein Gutaufnehmer sein, der zum Aufnehmen eines Schwads vom Erdboden dient. Das Arbeitsgerät, insbesondere der nachlaufende Arbeitsgeräteteil, kann weiterhin einen Behälter zur Aufnahme des aufgenommenen Erntegutes insbesondere in Form einer Presskammer oder eines Ladebehälters umfassen.

Die Deichselvorrichtung umfasst die Deichsel, die insbesondere eine langestreckte Deichsel sein kann. Die Deichselvorrichtung umfasst ein Deichseljoch.

Die Deichsel kann an einem anderen Ende eine Anschlusseinrichtung, beispielsweise eine Zugöse, zum Koppeln der Deichselvorrichtung an das Zugfahrzeug aufweisen, sodass das Arbeitsgerät mittels der Deichselvorrichtung mit dem Zugfahrzeug koppelbar ist. Dazu kann beispielsweise ein Kupplungsteil, beispielsweise eine Kupplung oder ein Kupplungsjoch oder zur Anordnung am Zugfahrzeug vorgesehen sein. Dadurch können das Kupplungsteil und die Anschlusseinrichtung an einem Kuppelpunkt des Kupplungsteils und/oder an einem vom Kuppelpunkt beabstandeten Anlenkpunkt miteinander koppelbar sein. Der Deichselarm kann als Teil der Deichsel oder aber als ein von der Deichsel separates mit der Deichsel verbindbares oder mit der Deichsel verbindbares Bauteil ausgebildet sein. Der Deichselarm kann beabstandet und/oder parallel zur Deichsel sein und/oder sich in Richtung des ersten Schwenklagers erstrecken, insbesondere sich parallel zur Deichsel in Richtung des ersten Schwenklagers erstrecken. Das Deichseljoch kann als jochförmiges Bauteil ausgebildet sein. Ausserdem kann das Deichseljoch um eine erste Schwenkachse schwenkbar am nachlaufenden Arbeitsgeräteteil, insbesondere am Rahmen des Arbeitsgeräts, gelagert sein. Das Deichseljoch ist zwischen der Deichsel und dem nachlaufenden Arbeitsgeräteteil angeordnet.

Die erste und/oder zweite Hochachse können mit der Längsachse des Arbeitsgeräts, insbesondere der Längsmittelachse des Arbeitsgeräts, und/oder der Längsachse der Deichsel, insbesondere der Längsmittelachse der Deichsel, einen Winkel von 75 Grad bis 105 Grad, bevorzugt einen Winkel von 85 Grad bis 95 Grad, im Speziellen einen Winkel von 90 Grad, einschliessen. Die erste und/oder zweite Hochachse können eine zur Längsachse des Arbeitsgeräts und/oder zur Längsachse der Deichsel vertikale oder vertikal verlaufende, insbesondere auch orthogonale, erste und/oder zweite Hochachse sein. Wesentlich für die Erfindung ist, dass sich die auf das Arbeitsgerät, insbesondere die Deichselvorrichtung, einwirkenden Drehmomente und/oder Kräfte über das erste und zweite Schwenklager verteilen, also nicht nur über ein einzelnes Schwenklager. Das landwirtschaftliche Arbeitsgerät mit der Deichselvorrichtung weist also den Vorteil auf, dass die Stabilität der Kopplung der Deichselvorrichtung an den nachlaufenden Arbeitsgeräteteil erhöht und die Kräfteverteilung verbessert wird. Dadurch sind das Arbeitsgerät, insbesondere die Verbindung des nachlaufenden Arbeitsgeräteteils mit der Deichselvorrichtung, und/oder die Kopplung des Arbeitsgeräts an das Zugfahrzeug, weniger störanfällig und/oder konstruktiv stabiler ausgebildet. Darüber hinaus wird vorteilhafterweise auch Zwängung des Arbeitsgeräts, insbesondere des ersten und zweiten Schwenklagers und/oder der Deichselvorrichtung, vermieden, insbesondere eine statische Überbestimmtheit bzw. Unbestimmtheit vermieden.

In Ausgestaltung der Erfindung, sind die erste und zweite Hochachse parallel zueinander angeordnet oder die erste und zweite Hochachse sind räumlich zusammenfallend, insbesondere koaxial, zueinander angeordnet, und bilden eine gemeinsame Hochachse aus. Wenn die erste und zweite Hochachse als die gemeinsame Hochachse ausgebildet sind, sind das erste und zweite Schwenklager entlang der gemeinsamen Hochachse zueinander beabstandet angeordnet. Das erste und zweite Schwenklager können also, insbesondere in einem im Arbeitsgerät verbauten Zustand, entlang der gemeinsamen Hochachse zueinander koaxial angeordnet sein. Die gemeinsame Hochachse kann mit der Längsachse des Arbeitsgeräts, insbesondere der Längsmittelachse des Arbeitsgeräts, und/oder der Längsachse der Deichsel, insbesondere der Längsmittelachse der Deichsel, einen Winkel von 75 Grad bis 105 Grad, bevorzugt einen Winkel von 85 Grad bis 95 Grad, im Speziellen einen Winkel von 90 Grad, einschliessen. Die gemeinsame Hochachse kann eine zur Längsachse des Arbeitsgeräts oder zur Längsachse der Deichsel vertikal verlaufende, insbesondere orthogonale, gemeinsame Hochachse sein. Die Massnahme, bevorzugt die Anordnung des ersten und zweiten Schwenklagers entlang der gemeinsamen Hochachse und die Anordnung des ersten und zweiten Schwenklagers entlang der gemeinsamen Hochachse, hat den Vorteil einer besseren Verteilung der Kräfte und/oder Drehmomente, insbesondere der Vermeidung einer Zwängung und/oder statischen Überbestimmtheit. Es kann also eine konstruktiv einfache und gleichzeitig stabilere Kopplung des nachlaufenden Arbeitsgeräteteils mit Deichselvorrichtung ausgebildet werden, wobei weiterhin eine optimale Schwenkbarkeit des nachlaufenden Arbeitsgeräteteils gegenüber der Deichselvorrichtung gewährleistet wird.

In Ausgestaltung der Erfindung sind der nachlaufende Teil des Arbeitsgeräts und die Deichsel oder das Deichseljoch und die Deichsel mittels mindestens einen ersten Aktuator gekoppelt. Dabei sind die Deichsel und/oder der nachlaufende Teil des Arbeitsgeräts oder die Deichsel und/oder das Deichseljoch mittels des ersten Aktuators derart um die erste und zweite Hochachse oder die gemeinsame Hochachse schwenkbar, dass ein Schwenkwinkel zwischen der Deichsel und dem nachlaufenden Arbeitsgeräteteil, insbesondere der Deichsel und dem Deichseljoch, verstellbar, bevorzugt auch einstellbar und feststellbar ist. Der erste Aktuator kann als Hydraulikzylinder ausgebildet sein. Es ist jedoch auch denkbar eine andere, beispielsweise elektrische, mechanische oder pneumatische Betätigungsart, insbesondere eines Zylinders zu wählen. So kann der erste Aktuator auch als Elektromotor, beispielsweise Spindelmotor, ausgebildet sein. Auch eine entsprechende Anordnung mit einem Seilzug ist denkbar, um die Betätigung rein mechanisch zu gestalten. Der Schwenkwinkel kann, unabhängig davon, ob das Arbeitsgerät oder die Deichselvorrichtung mit oder ohne das Deichseljoch ausgebildet sind, ein Winkel sein, der zwischen der Deichsel und dem nachlaufenden Arbeitsgeräteteil eingeschlossen ist. Der Schwenkwinkel kann als zwischen einer Längsachse der Deichsel, insbesondere einer Längsmittelachse der Deichsel, und der Längsachse des Arbeitsgeräts, insbesondere einer Längsmittelachse des Arbeitsgeräts eingeschlossener Winkel gemessen werden. Der Schwenkwinkel kann bevorzugt in einer Ebene liegen, die von den beiden Längsachsen oder Längsmittelachsen aufgespannt wird, besonders bevorzugt in einer horizontalen Ebene liegen, die von den beiden Längsachsen aufgespannt wird. Der Schwenkwinkel kann 0 Grad bis 170 Grad in beide Schwenkrichtungen, bevorzugt 0 Grad bis +/-150 Grad, besonders bevorzugt 0 Grad bis +/-130 Grad, im Speziellen bei der Geradeausfahrt des Arbeitsgeräts 0 Grad betragen. Mit anderen Worten, der erste Aktuator kann derart am nachlaufenden Arbeitsgeräteteil und der Deichsel oder dem Deichseljoch und der Deichsel angelenkt sein, insbesondere gekoppelt und/oder befestigt sein, dass durch Betätigen des ersten Aktuators der Schwenkwinkel verstellbar, insbesondere auch einstellbar und/oder feststellbar ist. Im Speziellen kann der Schwenkwinkel anstatt zwischen der Deichsel und dem nachlaufende Teil des Arbeitsgeräts, zwischen der Deichsel und dem Deichseljoch verstellbar sein. Ein wesentlicher Vorteil dieser Massnahme ist, dass der Schwenkwinkel mittels des ersten Aktuators eingestellt werden kann und damit unterschiedliche seitliche Versatze des Arbeitsgeräts, insbesondere des Deichseljochs und somit indirekt des nachlaufenden Arbeitsgeräteteils oder direkt des nachlaufenden Arbeitsgeräteteils, in Bezug auf die Deichselvorrichtung und/oder das Zugfahrzeug verstellt werden können. Ausserdem kann das Arbeitsgerät vorteilhafterweise an verschiedene Zugfahrzeuge mit unterschiedlichen Spurweiten und unterschiedlich breiten Reifen angepasst werden kann.

In Ausgestaltung der Erfindung umfasst das Arbeitsgerät, gegebenenfalls insbesondere die Deichselvorrichtung, eine Antriebskomponente. Die Antriebskomponente ist, bevorzugt beabstandet, zwischen dem ersten und zweiten Schwenklager angeordnet und/oder wird insbesondere zwischen dem ersten und zweiten Schwenklager geführt. Im Speziellen ist die Antriebskomponente durch den Deichselarm geführt und/oder im Deichselarm gelagert. Die Antriebskomponente kann eine Antriebswelle sein, mit der eine Zapfwelle des Zugfahrzeugs mit einer Antriebswelle des Arbeitsgeräts verbindbar und antreibbar sind. Die Antriebskomponente kann zwei- oder mehrstückig ausgebildet sein, bevorzugt ein erstes und zweites Antriebskomponententeil umfassen, besonders bevorzugt ein erstes und zweites Antriebswellenteil umfassen. Das erste und zweite Antriebskomponententeil können mittels eines Universalgelenks miteinander verbunden sein. Das Universalgelenk kann im Deichselarm gelagert sein. Das erste Antriebskomponententeil kann mit der Zapfwelle des Zugfahrzeugs und dem Universalgelenk koppelbar sein und das zweite Antriebskomponententeil kann mit dem Universalgelenk und der Antriebswelle des Arbeitsgeräts koppelbar sein. Das zweite Antriebskomponententeil kann zwischen dem ersten und zweiten Schwenklager, besonders bevorzugt unter dem ersten Schwenklager und über dem zweiten Schwenklager angeordnet sein. Vorteilhafterweise werden so auch die auf die Antriebskomponente einwirkenden Drehmomente und/oder Kräfte des Arbeitsgeräts und/oder des Zugfahrzeugs besser verteilt, sodass die Antriebskomponente weniger störanfällig ist und/oder die Anordnung der Antriebskomponente konstruktiv stabiler ausgebildet ist.

In Ausgestaltung der Erfindung umfasst der Deichselarm eine Spanneinrichtung. Die Spanneinrichtung umfasst an einem Ende der Spanneinrichtung das zweite Schwenklager und/oder die Spanneinrichtung umfasst an einem anderen Ende der Spanneinrichtung ein drittes Schwenklager, mit welchem die Spanneinrichtung schwenkbar am Deichselarm gelagert ist. Das zweite und/oder dritte Schwenklager können mit der Spanneinrichtung gekoppelt und/oder an dieser befestigt oder mit der Spanneinrichtung einstückig ausgebildet sein. Die Spanneinrichtung kann eine längenverstellbare Spanneinrichtung sein. Die Spanneinrichtung kann also derart ausgestaltet sein, dass zwischen dem zweiten und dritten Schwenklager eine Lagefixierung und/oder eine Hin- und Herbewegung und/oder eine Streckung und/oder eine koaxiale Bewegung, insbesondere entlang einer Längsachse der Spanneinrichtung ermöglicht wird. Das zweite und/oder dritte Schwenklager können ein Kugellager sein. Das dritte Schwenklager kann um eine dritte Hochachse schwenkbar sein. Die dritte Hochachse kann parallel zur ersten und zweiten Hochachse sein. Die erste, zweite und dritte Hochachse können in einer Ebene angeordnet sein. Vorteilhafterweise werden so die auf das Arbeitsgerät, insbesondere die Deichselvorrichtung, einwirkenden Drehmomente und/oder Kräfte mittels der Spannvorrichtung und das zweite und/oder dritte Schwenklager besser verteilt, sodass das Arbeitsgerät, insbesondere die Deichselvorrichtung, weniger störanfällig ist. Die Spannvorrichtung ermöglicht ausserdem einen einfachen Zusammenbau der Deichselvorrichtung und/oder eine gewünschte Vorspannung auf das zweite und/oder dritte Schwenklager aufzubringen.

In Ausgestaltung der Erfindung ist die Deichselvorrichtung am nachlaufenden Arbeitsgeräteteil um eine zu einer Querachse des Arbeitsgeräts parallele oder räumlich zusammenfallende erste Schwenkachse schwenkbar gelagert, und/oder der nachlaufenden Arbeitsgeräteteil und die Deichselvorrichtung, insbesondere das Deichseljoch, sind mittels mindestens einen zweiten Aktuator gekoppelt, wobei die Deichselvorrichtung, insbesondere das Deichseljoch, mittels des zweiten Aktuators derart um die erste Schwenkachse kippbar ist, dass ein Kippwinkel zwischen der Deichselvorrichtung, insbesondere der Deichsel, und dem nachlaufenden Arbeitsgeräteteil verstellbar, insbesondere auch einstellbar und feststellbar ist. Mit anderen Worten, der zweite Aktuator kann derart am nachlaufenden Arbeitsgeräteteil und dem Deichseljoch angelenkt, insbesondere gekoppelt und/oder befestigt sein, dass durch Betätigen des zweiten Aktuators der Kippwinkel verstellbar, insbesondere auch einstellbar und/oder feststellbar ist. Die erste Schwenkachse kann senkrecht zur Längsachse des Arbeitsgeräts und/oder zur ersten Hochachse angeordnet sein. Die erste Schwenkachse kann parallel oder räumlich zusammenfallend, also insbesondere koaxial, zu einer Querachse des Arbeitsgeräts, insbesondere zu einer horizontalen Querachse des Arbeitsgeräts sein. Die Deichselvorrichtung, insbesondere das Deichseljoch, kann mittels eines oder zwei oder mehrerer vierter Schwenklager am nachlaufenden Arbeitsgeräteteil um die erste Schwenkachse schwenkbar gelagert sein. Es können mindestens einer, bevorzugt zwei, drei, vier oder mehr, zweite Aktuatoren vorgesehen sein. Der zweite Aktuator kann bevorzugt als Hydraulikzylinder ausgebildet sein. Es ist jedoch auch denkbar eine andere, beispielsweise elektrische, mechanische oder pneumatische Betätigungsart, insbesondere eines Zylinders zu wählen. So kann der zweite Aktuator auch als Elektromotor, beispielsweise Spindelmotor, ausgebildet sein. Auch eine entsprechende Anordnung mit einem Seilzug ist denkbar, um die Betätigung rein mechanisch zu gestalten. Der Kippwinkel kann ein Winkel zwischen der Deichselvorrichtung, insbesondere der Deichsel, und dem nachlaufenden Arbeitsgeräteteil sein. Der Kippwinkel kann ein von einer Längsachse der Deichsel, insbesondere der Längsmittelachse der Deichsel, und einer Arbeitsgerätehochachse, also der Hochachse des Arbeitsgeräts, insbesondere der Hochmittelachse des Arbeitsgeräts, eingeschlossener Winkel sein. Der Kippwinkel kann in einer Ebene liegen, die von der Längsachse der Deichsel und der Arbeitsgerätehochachse aufgespannt wird, besonders bevorzugt in einer vertikalen Ebene liegen, die von der Längsachse der Deichsel und der Arbeitsgerätehochachse aufgespannt wird. Die Arbeitsgerätehochachse kann eine zur Längsachse des Arbeitsgeräts vertikale Achse sein. Der Kippwinkel kann 40 Grad bis 140 Grad betragen, bevorzugt 60 Grad bis 120 Grad, besonders bevorzugt 80 Grad bis 100 Grad. Aufgrund des Verstellens des Kippwinkels kann vorteilhafterweise eine Höhe der Deichselvorrichtung oder des nachlaufenden Arbeitsgeräteteils in Bezug auf den Boden eingestellt werden, sodass es einfacher ist die Anschlusseinrichtung mit einem Zugfahrzeug zu verbinden. Von Vorteil kann dadurch ausserdem die Höhe des Arbeitsgeräts, bevorzugt des Bearbeitungselements, besonders bevorzugt des Gutaufnehmers, in Bezug auf den Boden einstellbar sein. Beispielsweise kann dadurch eine Höhe des Bearbeitungselements eingestellt werden, um die Ernte zu optimieren (untere Position), aber auch die Bodenfreiheit erhöht werden, z.B. beim Überqueren der Schwaden oder Betreten eines Feldes, Vorbeifahren an einer Schüssel etc.. Darüber hinaus können durch diese Massnahme unterschiedliche vertikale Versätze des Arbeitsgeräts, insbesondere der Deichselvorrichtung und des nachlaufenden Arbeitsgeräteteils zueinander, eingestellt werden. Von Vorteil kann ausserdem das Einstellen des Kippwinkels mit dem Einstellen des Schwenkwinkels kombiniert werden.

In Ausgestaltung der Erfindung können das erste und/oder zweite und/oder dritte und/oder vierte und/oder fünftes Schwenklager ein Drehlager oder ein Kugellager oder ein Kippbolzen sein.

In Ausgestaltung der Erfindung weist das Arbeitsgerät eine Steuereinheit auf, die mit dem ersten Aktuator verbunden ist, und die Steuereinheit betreibbar ist, den ersten Aktuator in einer Weise anzusteuern, dass der Schwenkwinkel verstellbar, insbesondere einstellbar und/oder feststellbar ist, und/oder die Steuereinheit mit dem zweiten Aktuator verbunden ist, und die Steuereinheit betreibbar ist, den zweiten Aktuator in einer Weise anzusteuern, dass der Kippwinkel verstellbar, insbesondere einstellbar und/oder feststellbar ist. Die Steuereinheit kann sich aber auch an Bord des Zugfahrzeugs befinden oder kann räumlich über das Zugfahrzeug und das Arbeitsgerät verteilt sein. Die Steuereinheit kann mit dem ersten Aktuator verbunden, insbesondere signalverbunden, sein, der zur Verstellung des Schwenkwinkels dient. Außerdem kann die Steuereinheit mit dem zweiten Aktuator verbunden, insbesondere signalverbunden, sein, der zur Verstellung des Kippwinkels dient. Die Steuereinheit kann also derart ausgestaltet und eingerichtet sein, dass mit dem ersten und/oder zweiten Aktuator das Arbeitsgerät, insbesondere die Deichselvorrichtung und/oder der nachlaufende Arbeitsgeräteteil bzw. die Deichsel und das Deichseljoch, verstellbar, insbesondere auch gegeneinander verschwenkbar sind, derart, dass der Schwenkwinkel und/oder Kippwinkel ermittelbar und/oder speicherbar und/oder ausgebbar und/oder einstellbar und/oder verstellbar ist. Es kann auch ein Verfahren zum Verstellen, insbesondere Einstellen und/oder Feststellen des Schwenkwinkels und/oder Kippwinkels mit der Steuereinheit durchführbar sein. Ausserdem kann die Steuereinheit im Betrieb den ersten und/oder zweiten Aktuator derart ansteuern, dass beispielsweise die Längsachse des Bearbeitungselements stets zumindest näherungsweise orthogonal zu einer Solllinie orientiert ist, was beispielsweise bei einem mit einem Schwad zusammenwirkenden Bearbeitungselement den Verschleiß vermindert. Im Speziellen können einer oder mehrere Sensoren am Arbeitsgerät vorgesehen sein, insbesondere im Behälter oder am Bearbeitungselement. Der oder die Sensoren können über die Breite des Behälters und/oder des Bearbeitungselements verteilt sein. Der oder die Sensoren können eine Verteilung, insbesondere eine seitliche Verteilung, des Ernteguts erfassen, um eine Verteilung eines Ernteguts im Behälter und/oder eine Verteilung eines Schwads, insbesondere einen Querschnitt oder ein Volumen des Schwads, am Bearbeitungselement zu detektieren. Der oder die Sensoren können mit der Steuereinheit verbunden sein. Das oder die Signale des oder der Sensoren kann der Steuereinheit als weiterer Parameter zur Ansteuerung des ersten und/oder zweiten Aktuators dienen. Die Steuereinheit kann durch eine Positionsbestimmungseinrichtung und/oder eine Erfassungseinrichtung mit einer Information hinsichtlich der Lage der Solllinie beaufschlagt werden. Vorteilhafterweise kann durch eine derartige Steuereinheit, die während des Fahrens des Arbeitsgeräts den Schwenkwinkel und/oder Kippwinkel ändert, insbesondere periodisch oder schrittweise ändert, erreicht werden, dass das in der Arbeitsstellung seitlich außerhalb der Spur des Zugfahrzeugs versetzte Arbeitsgerät eine in horizontaler Richtung pendelnde Fahrt ausführt, ohne dass das Zugfahrzeug seine Fahrtrichtung ändern muss, und/oder die vertikale Ausrichtung, insbesondere eine Arbeitshöhe, des Arbeitsgerät während der Fahrt geändert werden kann. Beispielsweise kann sich also eine Ballenpresse oder ein Ladewagen vor dem aufzunehmenden Schwad seitlich hinter dem geradeaus neben dem Schwad fahrenden Zugfahrzeug durch das Gelände schlängelt, sodass das Bearbeitungselement oder die Aufnahmeeinrichtung den vergleichsweise schmalen Schwad im Laufe des Aufnahmevorgangs an sämtlichen Stellen ihrer Arbeitsbreite und/oder in einer optimalen Arbeitshöhe erfasst, ohne dass das Zugfahrzeug seine Fahrtrichtung ändern muss. Diese Massnahme beinhaltet gleichzeitig den Vorteil, dass das gleiche Arbeitsgerät mit geringstem Verstellaufwand an verschiedene Zugfahrzeuge angepasst werden kann. Die Erfindung betrifft weiter eine Deichselvorrichtung für ein landwirtschaftliches Arbeitsgerät nach mindestens einem der Ansprüche 1 bis 9 zum Koppeln, insbesondere Anhängen, des Arbeitsgeräts an ein Zugfahrzeug. Die Deichselvorrichtung umfasst zumindest eine Deichsel, einen Deichselarm und ein erstes und zweites Schwenklager. Die Deichselvorrichtung umfasst ausserdem ein Deichseljoch. Die Deichsel ist an einem Ende mittels des ersten Schwenklagers am Deichseljoch um die erste Hochachse schwenkbar gelagert. Die Deichselvorrichtung umfasst weiter einen Deichselarm, der sich aus der Deichsel erstreckt. Der Deichselarm ist an einem Deichselarmende mittels des zweiten Schwenklagers am Deichseljoch um eine zweite Hochachse schwenkbar gelagert.

Die erfindungsgemässe Deichselvorrichtung weist die oben beschriebenen Vorteile des erfindungsgemässen Arbeitsgeräts auf.

Die Erfindung betrifft ausserdem eine Zugfahrzeug-Arbeitsgerät-Kombination mit einem Zugfahrzeug und einem erfindungsgemässen Arbeitsgerät nach einem der Ansprüche 1 bis 9. Die Zugfahrzeug-Arbeitsgerät-Kombination kann eine Kombination aus einem Zugfahrzeug und einem Arbeitsgerät sein. Das Arbeitsgerät kann mittels der Deichselvorrichtung an das Zugfahrzeug koppelbar bzw. gekoppelt, insbesondere anhängbar bzw. angehängt sein. Das Zugfahrzeug kann zum Ziehen und/oder Schieben des Arbeitsgeräts eingesetzt werden, insbesondere kann das Arbeitsgerät vom Zugfahrzeug gezogen sein. Das Zugfahrzeug kann eine landwirtschaftliche Zugmaschine, im Speziellen ein Traktor oder Schlepper oder dergleichen sein. Das Zugfahrzeug kann zwei-, drei- oder vierrädrig oder mehrrädrig sein und/oder eine Gleiskette aufweisen. Das Zugfahrzeug kann eine Fahrerkabine, einen Motor und ein Getriebe umfassen. Die erfindungsgemässe Zugfahrzeug-Arbeitsgerät-Kombination weist die oben beschriebenen Vorteile des erfindungsgemässen Arbeitsgeräts auf.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. In den schematischen Zeichnungen zeigen:
- Fig. 1: eine schematische Seitenansicht eines ersten Ausführungsbeispiels eines erfindungsgemässen Arbeitsgeräts mit einem ersten Ausführungsbeispiel einer erfindungsgemässen Deichselvorrichtung und einer erfindungsgemässe Zugfahrzeug-Arbeitsgerät-Kombination, und
- Fig. 2: eine schematische Darstellung eines zweiten Ausführungsbeispiels des erfindungsgemässen Arbeitsgerät mit einem zweiten erfindungsgemässen Deichselvorrichtung, und
- Fig. 3a-3c: drei schematische Darstellungen mit einem dritten bis fünften Ausführungsbeispiel der erfindungsgemässen Deichselvorrichtung, und
- Fig. 4: eine schematische Darstellung eines dritten Ausführungsbeispiels des erfindungsgemässen Arbeitsgeräts mit einem sechsten Ausführungsbeispiel einer erfindungsgemässen Deichselvorrichtung, und
- Fig. 5a-5b: zwei schematische Darstellungen mit einem vierten und fünften Ausführungsbeispiel des erfindungsgemässen Arbeitsgeräts, und
- Fig. 6: eine schematische Darstellungen mit einem sechsten Ausführungsbeispiel des erfindungsgemässen Arbeitsgeräts.

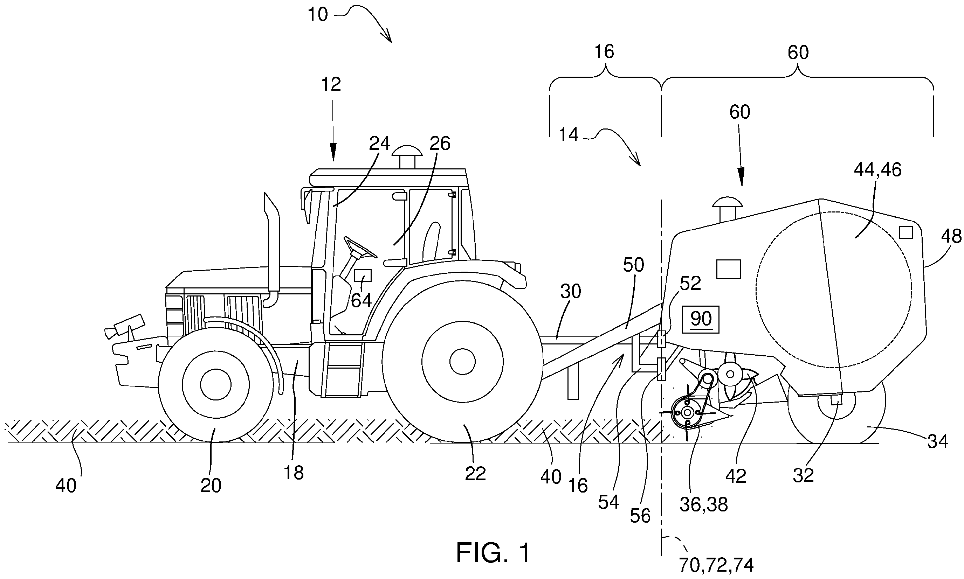

Figur 1 zeigt eine schematische Seitenansicht eines ersten Ausführungsbeispiels eines erfindungsgemässen Arbeitsgeräts 14 mit einem ersten Ausführungsbeispiel einer erfindungsgemässen Deichselvorrichtung 16 bzw. einer erfindungsgemässen Zugfahrzeug-Arbeitsgerät-Kombination 10. Die Zugfahrzeug-Arbeitsgerät-Kombination 10 umfasst ein Zugfahrzeug 12 und ein mittels einer Deichselvorrichtung 16 an das Zugfahrzeug 10 gekoppeltes Arbeitsgerät 14 in Form einer Rundballenpresse.

Das Zugfahrzeug 12 ist ein landwirtschaftliches Fahrzeug in Form eines Traktors, wobei der grundsätzliche Aufbau eines Traktors als bekannt angenommen wird. Das Zugfahrzeug 10 baut sich auf einen tragenden Rahmen 18, auf, der sich auf lenkbaren Vorderrädern 20 und Hinterrädern 22 abstützt und eine Kabine 24 trägt, in der sich ein Bedienerarbeitsplatz 26 befindet. Die Vorderrädern 20 und/oder Hinterräder 22 werden durch einen Motor, welcher in Form eines Verbrennungsmotors ausgebildet ist, und einem mit diesem zusammenwirkenden Getriebe angetrieben.

Das Arbeitsgerät 12 umfasst ein Fahrgestell oder Rahmen 32, das sich über Bodeneingriffsmittel, hier Räder 34, zur Abstützung auf dem Erdboden abstützt, ein Bearbeitungselement 36 in Form eines Gutaufnehmers 38 zur Aufnahme von in einem Schwad 40 auf dem Erdboden liegenden Ernteguts und einen Förderer 42, der das vom Gutaufnehmer 38 aufgenommene Erntegut in einen Behälter 46 in Form eines Ballenpressraums 44 fördert. Der Ballenpressraum 44 wird in an sich bekannter Weise durch Pressmittel (nicht gezeigt) begrenzt. Die Rundballenpresse kann eine größenunveränderliche Ballenpresskammer umfassen. Hierbei kann das Pressmittel als Pressrolle ausgebildet sein, insbesondere eine Vielzahl zueinander parallel verlaufender Pressrollen zum Pressen des Ernteguts. Die Rotationsachsen der Pressrollen können bei geschlossener Auswurfklappe auf einem Kreisbogen liegen und wenigstens eine der Pressrollen kann angetrieben sein. Die Anordnung der Pressrollen im Ballenpressraum 44 kann einer Zylinderform entsprechen, sodass die Pressrollen zylindrisch um den Rundballen angeordnet sind und eine zylindrische Umfangsfläche ausbilden. Alternativ kann die Rundballenpresse auch mit einer größenveränderlichen Ballenpresskammer bzw. als Rundballenpresse mit variabler Ballenpresskammer ausgebildet sein, wobei die Pressmittel dann als Riemen, Gurte oder Kettenanordnungen ausgebildet sein können. Ein fertig gestellter Ballen kann durch eine nach oben schwenkbare Rücktür 48 ausgeworfen und auf dem Feld abgelegt werden.

Das Arbeitsgerät 14 umfasst die Deichselvorrichtung 16. Die Deichselvorrichtung wiederum umfasst eine Deichsel 50, die an das Zugfahrzeug 12 und das Arbeitsgerät 14 gekoppelt bzw. koppelbar ist. Die Deichsel 50 ist an einem Ende mittels eines ersten Schwenklagers 52 an einem der Deichselvorrichtung 16 nachlaufenden Arbeitsgeräteteil 60, insbesondere den Rahmen 32 des Arbeitsgeräts 12, um eine erste Hochachse 70 schwenkbar gelagert. Ausserdem umfasst die Deichselvorrichtung 16 einen Deichselarm 54, der als Teil der

Deichsel 50 ausgebildet ist und sich aus der Deichsel 50 erstreckt. Der Deichselarm 54 ist an einem Deichselarmende mittels des zweiten Schwenklagers 56 am nachlaufenden Arbeitsgeräteteil 60, insbesondere ebenfalls dem Rahmen 32 des Arbeitsgeräts, um eine zweite Hochachse 72 schwenkbar gelagert. Die erste und zweite Hochachse 70, 72 sind räumlich zusammenfallend angeordnet und als eine gemeinsame Hochachse 74 ausgebildet und das erste und zweite Schwenklager 52, 56 sind entlang der gemeinsamen Hochachse 74 zueinander beabstandet angeordnet.

Der mechanische Antrieb der angetriebenen Elemente des Arbeitsgeräts 14 erfolgt über eine Antriebskomponente 30, insbesondere eine Zapfwelle 30, vom Zugfahrzeug 10 her, obwohl auch ein Antrieb durch Elektromotoren denkbar wäre, die vom Zugfahrzeug 10 her mit elektrischer Energie versorgt werden. Die Antriebskomponente 30 ist zweiteilig, im Deichselarm 54 gelagert und durch den Deichselarm 54 geführt.

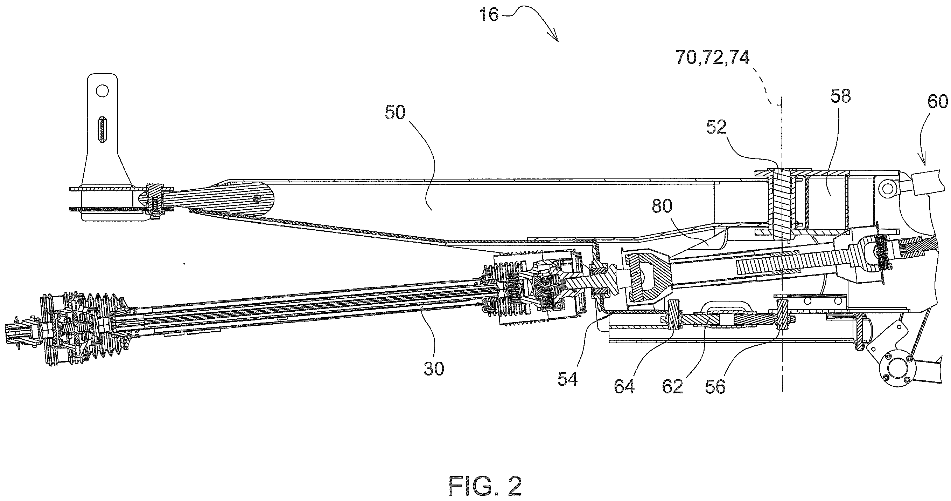

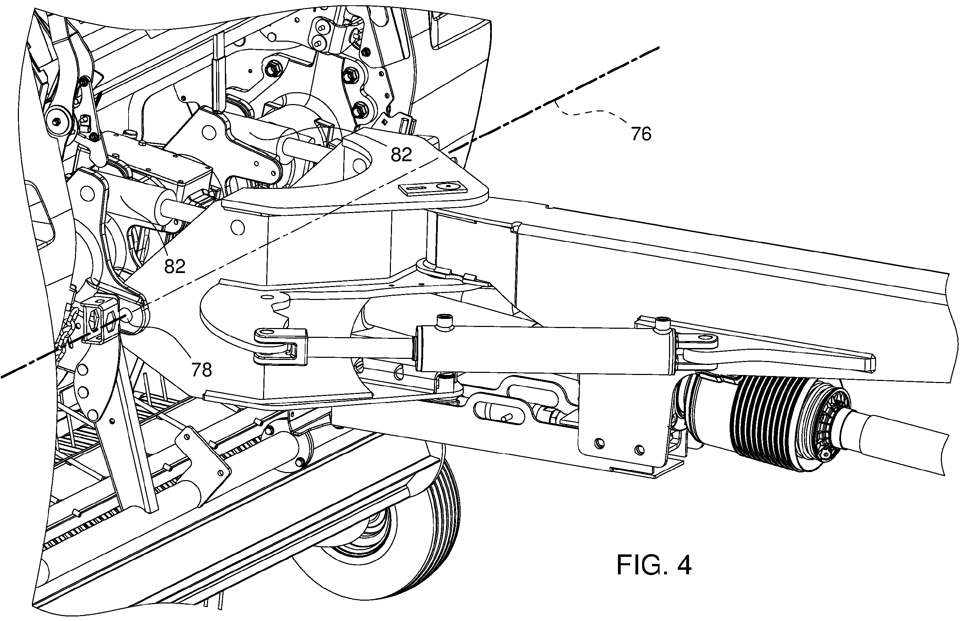

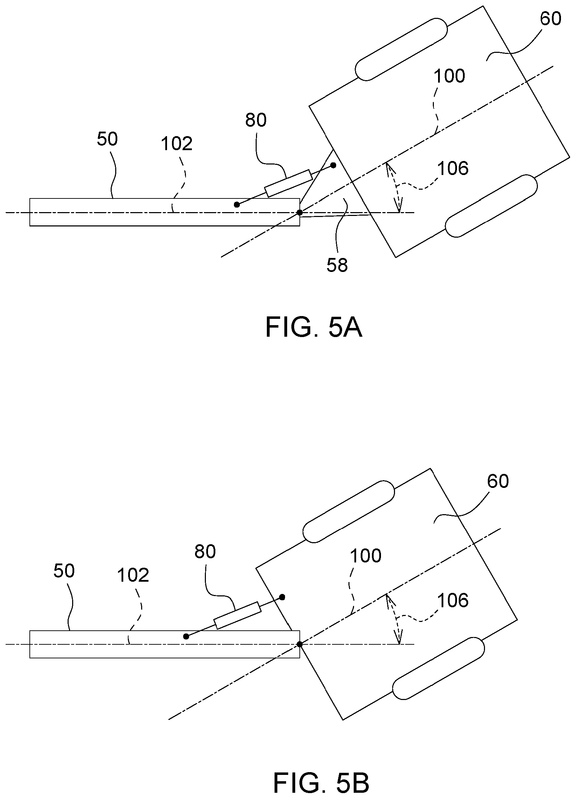

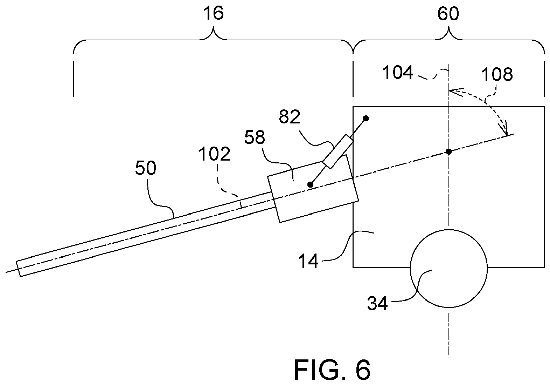

Das Arbeitsgerät 14 weist eine Steuereinheit 90 auf, die mit einem ersten Aktuator (Bezugszeichen 80, siehe beispielsweise Figuren 2 und 4) verbunden ist. Die Steuereinheit 90 ist betreibbar, den ersten Aktuator 80 in einer Weise anzusteuern, dass ein Schwenkwinkel (Bezugszeichen 106, siehe Figuren 5a bis 5b) einstellbar ist. Darüber hinaus kann das Arbeitsgerät 14 auch einen zweiten Aktuator (Bezugszeichen 82, siehe Figuren 4 und 6) aufweisen. Die Steuereinheit 90 kann auch mit dem zweiten Aktuator 82 verbunden sein, und die Steuereinheit 90 kann derart betreibbar sein, den zweiten Aktuator 82 in einer Weise anzusteuern, dass ein Kippwinkel (Bezugszeichen 108, siehe Figur 6) einstellbar ist.

Figur 2 zeigt eine schematische Darstellung eines zweiten Ausführungsbeispiels des erfindungsgemässen Arbeitsgeräts 14 mit einem zweiten Ausführungsbeispiel einer erfindungsgemässen Deichselvorrichtung 16. Die in Figur 2 gezeigte Darstellung entspricht im Wesentlichen dem in Figur 1 gezeigten Arbeitsgerät 14 bzw. der gezeigten Deichselvorrichtung 16, sodass im Folgenden lediglich auf die Unterschiede eingegangen wird.

Der nachlaufende Teil des Arbeitsgeräts 60 und die Deichselvorrichtung 16 sind miteinander gekoppelt. Die Deichselvorrichtung umfasst die Deichsel 50, aus welcher sich der Deichselarm 54 erstreckt und der als Teil der Deichsel ausgebildet ist, sowie das Deichseljoch 58. Die Deichsel ist an einem Ende mittels des ersten Schwenklagers 52 am Deichseljoch 58 um die erste Hochachse 70 schwenkbar gelagert. Der Deichselarm 54 umfasst eine Spanneinrichtung 62, wobei die Spanneinrichtung 62 an einem Ende der Spanneinrichtung 62 das zweite Schwenklager 56 umfasst. Dadurch ist die Spanneinrichtung 62 mittels des zweiten Schwenklagers 56 am Deichseljoch 58 um die zweite Hochachse 72 schwenkbar gelagert. Die Spanneinrichtung 62 umfasst ausserdem am anderen Ende der Spanneinrichtung 62 ein drittes Schwenklager 64, mit welchem die Spanneinrichtung 62 schwenkbar am mit der Deichsel 50 fest verbundenen Teil des Deichselarms 54 gelagert ist.

Die erste und zweite Hochachse 70, 72 sind wiederum räumlich zusammenfallend angeordnet und als eine gemeinsame Hochachse74 ausgebildet. Ebenso sind das erste und zweite Schwenklager 52, 56 entlang der gemeinsamen Hochachse 74 zueinander beabstandet angeordnet. Das Deichseljoch 58 ist mit dem nachlaufenden Arbeitsgeräteteil 60 verbunden. Ausserdem sind die Deichsel 50 und das Deichseljoch 58 mittels eines ersten Aktuators 80 gekoppelt. Der erste Aktuator 80 ist als Hydraulikzylinder ausgeführt. Das Deichseljoch 58 und somit auch der nachlaufende Teil des Arbeitsgeräts 60 sind mittels des ersten Aktuators 80 derart um die gemeinsame Hochachse 74 schwenkbar, dass der Schwenkwinkel 106 zwischen der Deichsel 50 und dem Deichseljoch 58 einstellbar ist. Das Arbeitsgerät 14, insbesondere die Deichselvorrichtung 16 umfasst im Weiteren die Antriebskomponente 30, die zwischen dem ersten und zweiten Schwenklager 52, 56 angeordnet ist. Ausserdem ist die Antriebskomponente 30 zweistückig ausgebildet und umfasst ein erstes und zweites Antriebskomponententeil. Das erste und zweite Antriebskomponententeil sind mittels eines Universalgelenks miteinander verbunden. Das Universalgelenk ist im Deichselarm 54 gelagert. Das erste Antriebskomponententeil ist mit der Zapfwelle des Zugfahrzeugs und dem Universalgelenk koppelbar und das zweite Antriebskomponententeil ist mit dem Universalgelenk und der Antriebswelle des Arbeitsgeräts gekoppelt. Das zweite Antriebskomponententeil ist zwischen dem ersten und zweiten Schwenklager 52, 56 angeordnet.

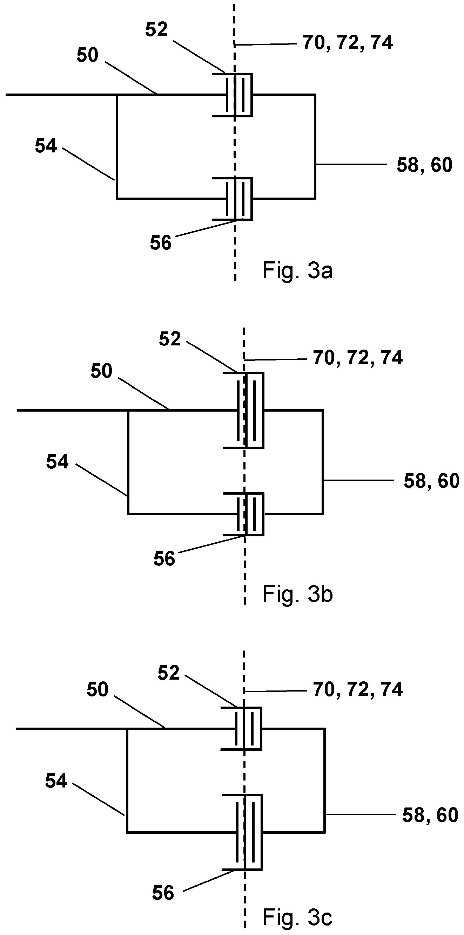

Die Figuren 3a bis 3c zeigen schematische Darstellungen mit einem dritten bis fünften Ausführungsbeispiel der erfindungsgemässen Deichselvorrichtung 16. Die in den Figuren 3a bis 3c gezeigten Ausführungen der Deichselvorrichtung 16 entsprechen im Wesentlichen den in den Figuren 1 und 2 gezeigten Deichselvorrichtungen 16, sodass im Folgenden lediglich auf die Unterschiede eingegangen wird. Die in Figur 3a gezeigten ersten und zweiten Schwenklager 52, 56 sind gleich gross. In Figur 3b ist das erste Schwenklager 52 grösser als das zweite Schwenklager 56, d.h. das erste Schwenklager 52 ist für die Aufnahme grösserer Kräfte ausgestaltet, als das zweite Schwenklager 56. In Figur 3c ist die Situation genau umgekehrt, d.h. das erste Schwenklager 52 ist kleiner als das zweite Schwenklager 56, d.h. das zweite Schwenklager 52 ist für die Aufnahme grösserer Kräfte ausgestaltet, als das erste Schwenklager 56.

Figur 4 zeigt eine schematische Darstellung eines dritten Ausführungsbeispiels des erfindungsgemässen Arbeitsgeräts 14 mit einem sechsten Ausführungsbeispiel einer erfindungsgemässen Deichselvorrichtung 16. Die in Figur 4 gezeigte Darstellung entspricht im Wesentlichen den in den Figuren 1, 2 und 3a bis 3c gezeigten Arbeitsgeräten 14 bzw. gezeigten Deichselvorrichtungen 16, sodass im Folgenden lediglich auf die Unterschiede eingegangen wird. Die Deichselvorrichtung 16, insbesondere das Deichseljoch 58, ist am nachlaufenden Arbeitsgeräteteil 60 um eine zu einer horizontalen Querachse des Arbeitsgeräts 14 parallele oder räumlich zusammenfallende erste Schwenkachse 76 schwenkbar gelagert. Der nachlaufende Teil des Arbeitsgeräts 60 und das Deichseljoch 14 sind mittels eines zweiten Aktuators 82 gekoppelt. Dadurch ist der nachlaufende Teil des Arbeitsgeräts 60 mittels des zweiten Aktuators 82 derart um die erste Schwenkachse 76 kippbar, dass der Kippwinkel 108 zwischen der Deichselvorrichtung 16 und dem nachlaufenden Arbeitsgeräteteil 60 einstellbar ist. Die Deichselvorrichtung 16, insbesondere das Deichseljoch 58, ist mittels eines vierten Schwenklagers 78, das als Kippbolzen ausgebildet ist, am nachlaufenden Arbeitsgeräteteil 60 um die erste Schwenkachse 76 schwenkbar gelagert. Darüber hinaus kann die Steuereinheit 90 mit dem zweiten Aktuator 82 verbunden sein, und die Steuereinheit 90 betreibbar ist, den zweiten Aktuator 82 in einer Weise anzusteuern, dass der Kippwinkel 108 einstellbar ist.

Die Figuren 5a und 5b zeigen eine schematische Darstellung eines vierten und fünften Ausführungsbeispiels des erfindungsgemässen Arbeitsgeräts 14. Die in den Figuren 5a und 5b gezeigte Darstellung entspricht im Wesentlichen den in den Figuren 1 bis 4 gezeigten Arbeitsgeräten 14 bzw. Deichselvorrichtungen 16, sodass im Folgenden lediglich auf die Unterschiede eingegangen wird. Wie den Figuren 5a und 5b zu entnehmen ist, entspricht der Schwenkwinkel 106, unabhängig davon, ob die Deichselvorrichtung 16 mit (Figur 5a) oder ohne (Figur 5b) das Deichseljoch 58 ausgebildet ist, einem Winkel der von einer Längsachse der Deichsel 102 und der Längsachse des Arbeitsgeräts 100 eingeschlossen ist.

Figur 6 zeigt eine schematische Darstellung eines sechsten Ausführungsbeispiels des erfindungsgemässen Arbeitsgeräts 14. Die in Figur 6 gezeigte Darstellung entspricht im Wesentlichen den in den Figuren 1 bis 5b gezeigten Ausführungsbeispielen des Arbeitsgeräts 14 bzw. der Deichselvorrichtung 16, sodass im Folgenden lediglich auf die Unterschiede eingegangen wird. Wie Figur 6 zu entnehmen ist, entspricht der Kippwinkel 108 einem Winkel der von einer Längsachse der Deichsel 102 und einer Arbeitsgerätehochachse 104, also der Hochachse des Arbeitsgeräts, eingeschlossen ist.

## Patentansprüche

1. Landwirtschaftliches Arbeitsgerät mit einer Deichselvorrichtung (16) zum Ziehen des Arbeitsgeräts (14) mit einem Zugfahrzeug (12), wobei das Arbeitsgerät (14) ein Bodeneingriffsmittel (34) zur Abstützung auf dem Erdboden umfasst, und die Deichselvorrichtung (16) eine Deichsel (50) und ein Deichseljoch umfasst, wobei das Deichseljoch zwischen der Deichsel und dem nachlaufenden Arbeitsgeräteteil angeordnet ist, und die Deichselvorrichtung (16) einen Deichselarm (54) umfasst, **dadurch gekennzeichnet, dass** die Deichsel (50) an einem Ende mittels eines ersten Schwenklagers (52) am Deichseljoch (58) der Deichselvorrichtung (16) um eine erste Hochachse (70) schwenkbar gelagert ist, und der Deichselarm (54) an einem Deichselarmende mittels eines zweiten Schwenklagers (56) am Deichseljoch (58) um eine zweite Hochachse (72) schwenkbar gelagert ist.

2. Arbeitsgerät nach Anspruch 1, **dadurch gekennzeichnet, dass** die erste und zweite Hochachse (70, 72) parallel zueinander angeordnet sind oder die erste und zweite Hochachse (70, 72) räumlich zusammenfallend angeordnet und als eine gemeinsame Hochachse (74) ausgebildet sind und das erste und zweite Schwenklager (52, 56) entlang der gemeinsamen Hochachse (74) zueinander beabstandet angeordnet sind.

3. Arbeitsgerät nach Anspruch 1 oder 2, **dadurch gekennzeichnet, dass** der nachlaufende Arbeitsgeräteteil (60) und die Deichsel (50) oder das Deichseljoch (58) und die Deichsel (50) mittels mindestens einen ersten Aktuator (80) gekoppelt sind, wobei die Deichsel (50) und/oder der nachlaufende Arbeitsgeräteteil (60) oder die Deichsel (50) und/oder das Deichseljoch (58) mittels des ersten Aktuators (80) derart um die erste und zweite Hochachse (70, 72) oder die gemeinsame Hochachse (74) schwenkbar sind, dass ein Schwenkwinkel (106) zwischen der Deichsel (50) und dem nachlaufenden Arbeitsgeräteteil (60) verstellbar ist.

4. Arbeitsgerät nach mindestens einem der vorangehenden Ansprüche, **dadurch gekennzeichnet, dass** das Arbeitsgerät (14) eine Antriebskomponente (30) umfasst und die Antriebskomponente (30) zwischen dem ersten und zweiten Schwenklager (52, 56) angeordnet ist.

5. Arbeitsgerät nach mindestens einem der vorangehenden Ansprüche, **dadurch gekennzeichnet, dass** die Antriebskomponente (30) durch den Deichselarm (54) geführt und/oder im Deichselarm (54) gelagert ist.

6. Arbeitsgerät nach mindestens einem der vorangehenden Ansprüche, **dadurch gekennzeichnet, dass** der Deichselarm (54) eine Spanneinrichtung umfasst, wobei die Spanneinrichtung an einem Ende der Spanneinrichtung (62) das zweite Schwenklager (56) umfasst, und/oder die Spanneinrichtung (62) umfasst an einem anderen Ende der Spanneinrichtung (62) ein drittes Schwenklager (64), mit welchem die Spanneinrichtung (62) schwenkbar am Deichselarm (54) gelagert ist.

7. Arbeitsgerät nach mindestens einem der vorangehenden Ansprüche, **dadurch gekennzeichnet, dass** die Deichselvorrichtung (16) an einem nachlaufenden Arbeitsgeräteteil (60) um eine zu einer Querachse des Arbeitsgeräts (14) parallele oder räumlich zusammenfallende erste Schwenkachse (76) schwenkbar gelagert ist, und/oder der nachlaufende Arbeitsgeräteteil (60) und die Deichselvorrichtung (16) mittels mindestens einen zweiten Aktuator gekoppelt sind, und der nachlaufende Arbeitsgeräteteil (60) mittels des zweiten Aktuators (82) derart um die erste Schwenkachse (76) kippbar ist, dass ein Kippwinkel (108) zwischen der Deichselvorrichtung (16) und dem nachlaufenden Arbeitsgeräteteil (60) verstellbar ist.

8. Arbeitsgerät nach mindestens einem der vorangehenden Ansprüche, **dadurch gekennzeichnet, dass** das erste und/oder zweite und/oder dritte und/oder vierte und/oder fünfte Schwenklager (52, 56, 64) ein Drehlager oder ein Kugellager sind.

9. Arbeitsgerät nach mindestens einem der vorangehenden Ansprüche, **dadurch gekennzeichnet, dass** das Arbeitsgerät (14) eine Steuereinheit (90) aufweist, die mit dem ersten Aktuator (80) verbunden ist, und die Steuereinheit (90) betreibbar ist, den ersten Aktuator (80) in einer Weise anzusteuern, dass der Schwenkwinkel (106) verstellbar ist, und/oder die Steuereinheit (90) mit dem zweiten Aktuator (82) verbunden ist, und die Steuereinheit (90) betreibbar ist, den zweiten Aktuator (82) in einer Weise anzusteuern, dass der Kippwinkel (108) verstellbar ist.

10. Deichselvorrichtung für ein landwirtschaftliches Arbeitsgerät (14) nach mindestens einem der Ansprüche 1 bis 9 zum Koppeln des Arbeitsgeräts (14) an ein Zugfahrzeug (12), wobei die Deichselvorrichtung (16) eine Deichsel (50) und ein Deichseljoch umfasst, **dadurch gekennzeichnet, dass**
die Deichsel (50) an einem Ende mittels eines ersten Schwenklagers (52) am Deichseljoch (58) um eine erste Hochachse (70) schwenkbar gelagert ist, wobei die Deichselvorrichtung (16) einen Deichselarm (54) umfasst, der an einem Deichselarmende mittels eines zweiten Schwenklagers (56) am Deichseljoch (58) um eine zweite Hochachse (72) schwenkbar gelagert ist.

11. Zugfahrzeug-Arbeitsgerät-Kombination mit einem Zugfahrzeug (12) und einem Arbeitsgerät (14) nach einem der Ansprüche 1 bis 9.

## Claims

1. Agricultural implement having a tow bar device (16) for towing the implement (14) with a towing vehicle (12), wherein the implement (14) comprises a ground-engagement means (34) for support on the soil, and the tow bar device (16) comprises a tow bar (50) and a tow bar yoke, wherein the tow bar yoke is disposed between the tow bar and the trailing implement part, and the tow bar device (16) comprises a tow bar arm (54), **characterized in that** the tow bar (50) at one end by means of a first pivot bearing (52) is mounted on the tow bar yoke (58) of the tow bar device (16) so as to be pivotable about a first vertical axis (70), and the tow bar arm (54) at a tow bar arm end by means of a second pivot bearing (56) is mounted on the tow bar yoke (58) so as to be pivotable about a second vertical axis (72).

2. Implement according to Claim 1, **characterized in that** the first and the second vertical axis (70, 72) are disposed so as to be mutually parallel, or the first and the second vertical axis (70, 72) in spatial terms are disposed so as to coincide and are configured as a common vertical axis (74), and the first and the second pivot bearing (52, 56) are disposed so as to be mutually spaced apart along the common vertical axis (74).

3. Implement according to Claim 1 or 2, **characterized in that** the trailing implement part (60) and the tow bar (50), or the tow bar yoke (58) and the tow bar (50), are coupled by means of at least one first actuator (80), wherein the tow bar (50) and/or the trailing implement part (60), or the tow bar (50) and/or the tow bar yoke (58) by means of the first actuator (80) are pivotable about the first and the second vertical axis (70, 72) or the common vertical axis (74) in such a manner that a pivot angle (106) between the tow bar (50) and the trailing implement part (60) is adjustable.

4. Implement according to at least one of the preceding claims, **characterized in that** the implement (14) comprises a drive component (30) and the drive component (30) is disposed between the first and the second pivot bearing (52, 56).

5. Implement according to at least one of the preceding claims, **characterized in that** the drive component (30) is guided by way of the tow bar arm (54) and/or mounted in the tow bar arm (54).

6. Implement according to at least one of the preceding claims, **characterized in that** the tow bar arm (54) comprises a tensioning installation, wherein the tensioning installation at one end of the tensioning installation (62) comprises the second pivot bearing (56), and/or the tensioning installation (62) at another end of the tensioning installation (62) comprises a third pivot bearing (64) by way of which the tensioning installation (62) is mounted so as to be pivotable on the tow bar arm (54).

7. Implement according to at least one of the preceding claims, **characterized in that** the tow bar device (16) on a trailing implement part (60) is mounted so as to be pivotable about a first pivot axis (76) which is parallel to or in spatial terms coincides with a transverse axis of the implement (14), and/or the trailing implement part (60) and the tow bar device (16) are coupled by means of at least one second actuator, and the trailing implement part (60) by means of the second actuator (82) is able to be tilted about the first pivot axis (76) in such a manner that a tilt angle (108) between the tow bar device (16) and the trailing implement part (60) is adjustable.

8. Implement according to at least one of the preceding claims, **characterized in that** the first and/or the second and/or the third and/or the fourth and/or the fifth pivot bearing (52, 56, 64) are/is a rotary bearing or a ball bearing.

9. Implement according to at least one of the preceding claims, **characterized in that** the implement (14) has a control unit (90) which is connected to the first actuator (80), and the control unit (90) is able to be operated so as to actuate the first actuator (80) in such a manner that the pivot angle (106) is adjustable, and/or the control unit (90) is connected to the second actuator (82), and the control unit (90) is able to be operated so as to actuate the second actuator (82) in such a manner that the tilt angle (108) is adjustable.

10. Tow bar device for an agricultural implement (14) according to at least one of Claims 1 to 9, for coupling the implement (14) to a towing vehicle (12), wherein the tow bar device (16) comprises a tow bar (50) and a tow bar yoke, **characterized in that** the tow bar (50) at one end by means of a first pivot bearing (52) is mounted on the tow bar yoke (58) so as to be pivotable about a first vertical axis (70) wherein the tow bar device (16) comprises a tow bar arm (54) which at one tow bar arm end by means of a second pivot bearing (56) is mounted on the tow bar yoke (58) so as to be pivotable about a second vertical axis (72).

11. Towing vehicle/implement combination having a towing vehicle (12) and an implement (14) according to one of Claims 1 to 9.

## Revendications

1. Outil de travail agricole comprenant un dispositif de timon (16) pour tirer l'outil de travail (14) avec un véhicule tracteur (12), l'outil de travail (14) comprenant un moyen d'engagement avec le sol (34) pour le support sur le sol, et le dispositif de timon (16) comprenant un timon (50) et un joug de timon, le joug de timon étant agencé entre le timon et la partie d'outil de travail suivante, et le dispositif de timon (16) comprenant un bras de timon (54), **caractérisé en ce que** le timon (50) est monté de manière pivotante à une extrémité autour d'un premier axe vertical (70) au moyen d'un premier palier de pivotement (52) sur le joug de timon (58) du dispositif de timon (16), et le bras de timon (54) est monté de manière pivotante à une extrémité de bras de timon autour d'un deuxième axe vertical (72) au moyen d'un deuxième palier de pivotement (56) sur le joug de timon (58).

2. Outil de travail selon la revendication 1, **caractérisé en ce que** le premier et le deuxième axe vertical (70, 72) sont agencés parallèlement l'un à l'autre ou le premier et le deuxième axe vertical (70, 72) sont agencés de manière coïncidente dans l'espace et sont configurés sous la forme d'un axe vertical commun (74) et le premier et le deuxième palier de pivotement (52, 56) sont agencés à distance l'un de l'autre le long de l'axe vertical commun (74).

3. Outil de travail selon la revendication 1 ou 2, **caractérisé en ce que** la partie d'outil de travail suivante (60) et le timon (50) ou le joug de timon (58) et le timon (50) sont couplés au moyen d'au moins un premier actionneur (80), le timon (50) et/ou la partie d'outil de travail suivante (60) ou le timon (50) et/ou le joug de timon (58) pouvant pivoter au moyen du premier actionneur (80) autour du premier et du deuxième axe vertical (70, 72) ou de l'axe vertical commun (74) de telle sorte qu'un angle de pivotement (106) entre le timon (50) et la partie d'outil de travail suivante (60) est réglable.

4. Outil de travail selon au moins l'une quelconque des revendications précédentes, **caractérisé en ce que** l'outil de travail (14) comprend un composant d'entraînement (30) et le composant d'entraînement (30) est agencé entre le premier et le deuxième palier de pivotement (52, 56).

5. Outil de travail selon au moins l'une quelconque des revendications précédentes, **caractérisé en ce que** le composant d'entraînement (30) est guidé par le bras de timon (54) et/ou est monté dans le bras de timon (54).

6. Outil de travail selon au moins l'une quelconque des revendications précédentes, **caractérisé en ce que** le bras de timon (54) comprend un appareil de serrage, l'appareil de serrage comprenant à une extrémité de l'appareil de serrage (62) le deuxième palier de pivotement (56), et/ou l'appareil de serrage (62) comprenant à une autre extrémité de l'appareil de serrage (62) un troisième palier de pivotement (64) avec lequel l'appareil de serrage (62) est monté de manière pivotante sur le bras de timon (54).

7. Outil de travail selon au moins l'une quelconque des revendications précédentes, **caractérisé en ce que** le dispositif de timon (16) est monté sur une partie d'outil de travail suivante (60) de manière pivotante autour d'un premier axe de pivotement (76) parallèle à un axe transversal de l'outil de travail (14) ou coïncidant dans l'espace, et/ou la partie d'outil de travail suivante (60) et le dispositif de timon (16) sont couplés au moyen d'au moins un deuxième actionneur, et la partie d'outil de travail suivante (60) peut être basculée au moyen du deuxième actionneur (82) autour du premier axe de pivotement (76) de telle sorte qu'un angle de basculement (108) entre le dispositif de timon (16) et la partie d'outil de travail suivante (60) est réglable.

8. Outil de travail selon au moins l'une quelconque des revendications précédentes, **caractérisé en ce que** le premier et/ou le deuxième et/ou le troisième et/ou le quatrième et/ou le cinquième palier de pivotement (52, 56, 64) sont un palier rotatif ou un roulement à billes.

9. Outil de travail selon au moins l'une quelconque des revendications précédentes, **caractérisé en ce que** l'outil de travail (14) comprend une unité de commande (90) qui est reliée au premier actionneur (80), et l'unité de commande (90) peut être exploitée pour commander le premier actionneur (80) d'une manière telle que l'angle de pivotement (106) est réglable, et/ou l'unité de commande (90) est reliée au deuxième actionneur (82), et l'unité de commande (90) peut être exploitée pour commander le deuxième actionneur (82) d'une manière telle que l'angle de basculement (108) est réglable.

10. Dispositif de timon pour un outil de travail agricole (14) selon au moins l'une quelconque des revendications 1 à 9 pour accoupler l'outil de travail (14) à un véhicule tracteur (12), le dispositif de timon (16) comprenant un timon (50) et un joug de timon, **caractérisé en ce que** le timon (50) est monté de manière pivotante à une extrémité autour d'un premier axe vertical (70) au moyen d'un premier palier de pivotement (52) sur le joug de timon (58), le dispositif de timon (16) comprenant un bras de timon (54), qui est monté à une extrémité de bras de timon de manière pivotante autour d'un deuxième axe vertical (72) au moyen d'un deuxième palier de pivotement (56) sur le joug de timon (58) .

11. Combinaison de véhicule tracteur-outil de travail comprenant un véhicule tracteur (12) et un outil de travail (14) selon l'une quelconque des revendications 1 à 9.
